# EUROPEAN PATENT SPECIFICATION

(11) **EP 2 927 039 B1**
(45) Date of publication and mention of the grant of the patent: **10.06.2020**
(21) Application number: 14163095.4
(22) Date of filing: 01.04.2014
(51) Int. Cl.: B60K 15/035, B01D 53/72, B01D 53/86, F01N 3/20, F02M 25/08

(54) **Vehicle storage system and convertor for use in such a system**
Fahrzeugvorratssystem und Konverter zur Verwendung in einem solchen System
Système de stockage pour véhicule et convertisseur pour un tel système

(43) Date of publication of application: 07.10.2015
(73) Proprietor: Plastic Omnium Advanced Innovation and Research, 1130 Bruxelles (BE)
(72) Inventor: van Schaftingen, Jules-Joseph, 1300 Wavre (BE); Dougnier, François, 3190 Boortmeerbeek (BE)
(74) Representative: Remy, Vincent Noel Paul

(56) References cited:
- CA-A1- 1 205 980
- DE-A1-102011 106 934
- US-B2- 7 896 292
- US-B2- 8 495 863

## Description

### Field of Invention

The invention relates to a vehicle storage system comprising a tank for containing vapour or liquid and vapour. More in particular embodiments of the invention relate to a vehicle storage system with pressure reducing means for reducing the pressure in the tank.

### Background

Today in order to comply with evaporative emissions regulations, hydrocarbon vapours coming out of gasoline fuel storage systems, tanks for storing fuel that is primarily in liquid form in particular, are accumulated in a canister that stores them, so as to avoid these vapours to go to the atmosphere. The canister typically comprises an active carbon or coal filter. Periodically the canister is purged by burning the stored vapour in the internal combustion engine of the vehicle. With the introduction of hybrid vehicles and more specifically plug in hybrids, which are designed such that they could potentially go several months without using fuel, various efforts have been done in order to limit the vapour generation.

A first effort to overcome this problem consisted in the use of sealed system. Although such a system may work well, the pressure in the tank may become relatively high requiring tanks with an increased strength, and hence an increased weight. Typically, sealed systems require reinforcements of the structure of the tank and adapted components as the pressures encountered may rise to high values of around 350 mbar.

Other solutions have also been considered. There is known a system for condensing the vapours and sending them back to the fuel tank. Condensation systems require cooling means; in addition, the condensed vapours tend to vaporize very quickly once they have returned back in the tank, or even while being transferred back to the tank.

Vehicle storage systems and gas converters are e.g. known from US 7 896 292 B2, DE 10 2011 106 934 A1 and US 8 495 863 B2. Another gas converter is known from CA 1 205 980 A1.

### Summary

The object of embodiments of the invention is to provide an improved vehicle storage system comprising a tank storing liquid and vapour which allows keeping the pressure in the tank at an acceptable level whilst avoiding pollution of the atmosphere.

According to a first aspect of the invention there is provided a vehicle storage system as defined in claim 1.

According to a second aspect of the invention, there is provided a gas convertor as defined in claim 12. Thus, the gas convertor of the present invention acts as a chemical reactor (also called packed bed). In a particular embodiment, the gas convertor of the present invention can comprise only one type of substrate. In this particular embodiment, the same type of substrate can be used to support (i.e. immobilize) the biological catalyst(s) and to trap the incoming vapour. In another particular embodiment, the gas convertor of the present invention can comprise a plurality of types of substrate (i.e. at least two different substrates). For example, the gas convertor of the present invention can comprise a first type of substrate adapted to support the biological catalyst(s) and a second type of substrate adapted to trap (i.e. retain) the incoming vapour. For example, the different types of substrates can be disposed within the gas convertor according to an arrangement of successive layers. In another example, the different types of substrates can be dispersed within the gas convertor in a random manner.

It is also disclosed the use of a biological catalyst for chemical conversion of a vapour coming from a tank, particularly in the vehicle storage system of the invention.

It is also disclosed a method of operating a vehicle storage system comprising a tank containing vapour, said method comprising the steps of:
- transferring said vapour to a gas convertor comprising a biological catalyst;
- chemically converting said vapour under catalysis of the biological catalyst into reaction product;
- removing the reaction product from the gas converter.
It is also disclosed a vehicle storage system comprising a tank containing vapour and a pressure controller for control of pressure in the tank, wherein the pressure controller comprises a gas converter for chemical conversion of the vapour from the tank, said gas converter is configured to contain, in use, a biological catalyst for the conversion of the vapour.

It is also disclosed a method of pressure control of a vehicle storage system comprising a tank containing vapour, comprising the steps of sensing a pressure parameter in the tank; and if the pressure is above a predefined level, initiating a gas converter to chemically convert vapour from the tank under catalysis of biological catalyst.

Embodiments of the present invention are based on the insight that the vapour may be very effective reacted in a gas convertor by means of a biological catalyst. Such biological catalysts are active at temperatures at room temperature and particularly just above room temperature, for instance in the range of 30-45°C. The gas converter can be conditioned adequately, so as to provide these conditions when conversion is desired. Moreover, the inventors have understood that this conditioning may not be necessary constantly. If the biological catalyst is held at a lower or higher temperature, its catalysis may not be effective, and the catalyst might be destroyed. The catalyst can furthermore be maintained so as to be protected against extreme temperatures. Moreover, in one specific embodiment, the biological catalysts may be added to the gas convertor, so as to replace biological catalyst that has become inactive.

In an exemplary embodiment conditioning means are present that are configured for thermally conditioning the gas convertor. In particular when a biological catalyst is used, it may be advantageous to regulate the temperature in the convertor within an appropriate temperature range for performing the gas conversion of the vapour.

The conditioning means may comprise e.g. a heater. Suitably, the conditioning means furthermore comprise a thermally insulating encapsulation, such that the temperature can be most easily kept within the desired temperature range independent of the outside temperature and/or the generation of heat upon use of the combustion engine. Optionally, a cooler may be present, so as to lower the temperature in the gas converter in case the environmental temperature would be higher. The heater comprises, in a particular implementation, resistive heating elements, for instance in the form of metallic heating filaments (wires), flexible heaters (i.e. heaters comprising one or more resistive track(s) affixed to a film or placed between two films, or any other type of resistive elements that have a shape, size and flexibility suitable for being inserted into the gas converter. PTC (positive temperature coefficient) elements are more particularly suitable for heating. In a further embodiment, heat may be transmitted to the gas converter from heat sources within a vehicle, such as fuel cells, internal combustion engine, exhaust line. Means for heat transmission are known per se and include, for instance, heat pipes, heat pumps, heat exchangers.

In one further implementation, the gas converter is provided with a temperature sensor and the system is provided with control means. The control means are herein configured to control the conditioning means. More preferably, the control means further are coupled to a pressure sensor. In this manner, the control means may initiate operation of the gas converter by activating the conditioning means to increase the temperature in the gas converter. The control means may further be configured, in one embodiment, to control the temperature in the gas converter in a second predetermined temperature range corresponding to preservation of the biological catalyst, so as to extend its lifetime. In one specific implementation, the control means herein control that the temperature in the gas converter remains above a minimum temperature.

As mentioned above, the gas converter of the present invention functions as a chemical reactor. In a particular embodiment, the biological catalyst(s) can be immobilized on fibers. The fibers may be attached or held within the chemical reactor, so as to increase the chance that vapour gets into contact with the biological catalyst(s). In again a further embodiment, the biological catalyst(s) may be immobilized on and in a porous support, such as for instance an inorganic porous material. Suitable inorganic materials are for instance zeolites, alumina, zirconia, silica, as well known to the skilled person. The porous support itself could be arranged on or to a substrate, which could be made of any suitable material. In again further embodiments, the biological catalyst may be immobilized in different layers of resin and on membranes.

In one embodiment, use is made of a substrate that is provided with pores and/or channels and defines the vapour chamber within the gas converter. It is thereto more preferably arranged transversally to a flow direction of the vapour. In this manner, all vapour is brought towards the substrate surface at which the biological catalyst is present. More preferably, use is made of a heat-spreading substrate. In this manner, heat from the heaters may be transmitted to the biological catalysts in a gentle manner. One example of a heat-spreading substrate is for instance a semiconductor substrate, such as a silicon substrate. Such as substrate is moreover advantageous in that semiconductor processing allows the generation of channels and pores of a great variety of shapes, and the deposition of coatings, so as to tune surface properties.

Furthermore, suitably, the substrate is provided with draining channels that are provided for draining liquid reaction products.

In an embodiment the tank has a vapour outlet and an inlet; and the gas converter has an inlet connected to the vapour outlet of the tank, and an outlet connected to the inlet of the tank. In such an embodiment typically the convertor will be located outside the tank. In another possible embodiment the gas converter may be provided in the tank, preferably an upper part of the tank. More in particular the converter could be mounted on a mounting flange arranged in an upper part of the tank. It is noted that the convertor could in theory be located anywhere in the tank as long as it allows the vapour in the tank to enter in the convertor.

In a preferred embodiment the gas converter comprises at least one chemical compound configured to modify the molecular composition of the received vapour. By choosing an appropriate compound, the molecular composition of the received vapour may be converted, suitably with the additional effect that the pressure in the tank does not exceed a prescribed limit or is reduced (in case of a non-continuous operation of the gas converter). The pressure reduction effect of the conversion is particularly the situation, if the number of gaseous or vapour compounds is reduced and/or if the density of the compounds is increased, such that the vapour is effectively transformed into liquid reaction products. It is herein not necessary that all reaction products are liquid or that these are liquid at the operation temperature of the gas converter. A cooler and/or a chamber held at a lower temperature than the gas converter may be present so as to liquefy reaction products. Alternatively, some reaction products may be chosen so that they can be transported away, for instance in the case of formation of hydrogen gas, that is led away to fuel cells.

In one embodiment, the tank is a fuel tank and the vapour comprises hydrocarbons, more particularly alkanes. In this embodiment, the biological catalyst may be chosen to catalyse a predefined conversion. Preferably, the conversion is from alkanes into a more polar alkane derivative. Hydroxylation of the alkanes to alcohols using one of the following enzyme classes: methane monooxygenase, alkane hydroxylase, P450 enzymes: these can be used to convert alkanes up to C24. The conversion may alternatively be a multistep reaction, wherein an alkane is first hydroxylated to an alcohol followed by the conversion of the alcohol in an aldehyde, then to a fatty acid; also the alcohols could be further converted to the corresponding ketones that could be further oxidized to an ester. Furthermore, the gas converter can generate light fraction provided that overall the vapour pressure is reduced.

More generally, the biological catalyst(s) is or are chosen for catalysis of a reaction of an alkane to an alkane derivative. Examples of alkane derivatives include alcohols, acids, esters, aldehydes, ketons.

Additionally, and/or alternatively, the biological catalyst is chosen for increasing the molecular mass of the hydrocarbons, i.e. to convert a hexane or octane into a fatty acid (generally with a C14-C24 chain).

In case of a multistep reaction, the biological catalyst may be a mixture of various catalysts each typically suitable for one reaction. The biological catalysts may be provided as a mixture.

Alternatively and/or additionally, the gas converter may comprise a first and a second chamber that are provided in series, and wherein a first catalyst for a first reaction step is provided in the first chamber and wherein a second catalyst for a second reaction step is provided in the second chamber. It is herein not necessary that all the vapour is converted completely, i.e. it may even be suitable to provide a mixture of reaction products.

In this embodiment, it is highly suitable that the reaction product(s) are fed back to the fuel tank. The reaction products could be advantageous to better balance the resulting properties of the fuel mixture.

In an alternative embodiment, the tank may be a tank of an ammonia precursor, such as for instance urea or a concentrated urea solution of at least 10% urea up to the eutectic 32.5wt% urea in water, or a mixture known as aqua ammonia, which typically comprises ammonium hydroxide, residue of ammonia precursor and eventually other ammonium salts, such as ammonium bicarbonate (NH₄HCO₃). In this embodiment, the reaction products may be for instance ammonia or hydrogen suitable for use in either selective catalytic reduction (SCR) methods for purifying exhaust gases or for fuelling fuel cells operating on the basis of hydrogen. Suitable biological catalysts are herein urease.

Biological catalysis comprises all forms of catalysis in which the activating species (i.e. biological catalysts) is a biological entity or a combination of such. Included among these are enzymes, subcellular organelles, whole cells and multicellular organisms.

According to an embodiment the gas converter is located at a position which is such that the converted vapour can flow from the gas converter to the tank under the influence of gravity. In a particular embodiment where the convertor is located outside the tank, the gas converter may be located at a position which is higher than a maximum liquid level in the tank such that the converted vapour can flow from the outlet of the gas converter to the inlet of the tank under the influence of gravity. In an exemplary embodiment the convertor may be located on top of the tank. Such embodiments have the advantage that a pump is not required for returning the converted fuel vapour to the tank. In an embodiment where the convertor is located outside the tank, the vapour outlet of the tank may be located in an upper part of the tank, preferably at a location which is above a level corresponding with 90% of the height of the tank, more preferably in a top wall of the tank. The outlet of the gas converter may then be located in a lower part of the gas converter, preferably at a location which is below a level corresponding with 10% of the height of the gas converter, more preferably in a bottom wall of the gas converter.

In a preferred embodiment the gas converter further comprises an absorption material and/or an adsorption material adapted for absorbing and/or adsorbing fuel vapour. The adsorption material may comprise e.g. active carbon and/or zeolite. In a further developed embodiment the gas converter may comprise an outlet for connection to an internal combustion engine of the vehicle, and an inlet allowing to suck in air from the environment. In that way the convertor may have a double function, namely a function as gas converter and a function as canister. In function of the use of the internal combustion engine, the convertor may then operate in the chemical conversion mode or in the canister purging mode.

In a possible embodiment the vehicle storage system further comprises a canister, and the tank comprises a vapour outlet connected to an inlet of the canister. In such an embodiment there may be provided a valve for regulating a fuel vapour flow through the vapour outlet in the canister, and control means for controlling said valve to allow a fuel vapour flow in the canister during refuelling of the tank. The control means may be mechanical, hydraulic or electrical control means. The control means may be simple mechanical control means operated based on the level of fuel in the tank. The control means may be further adapted to control the valve in function of the pressure in the tank. E.g. if the pressure in the tank rises above a critical level the valve may be opened.

In yet another embodiment the vehicle storage system comprises a sub-tank for collecting the converted vapour from the convertor, a valve for regulating the flow of converted vapour from the sub-tank to the inside of the tank, and control mean configured for controlling the valve. The control means may be mechanical, hydraulic or electrical control means. The control means may be simple mechanical control means operated based on the level of liquid in the tank. In that way it may be achieved that the converted vapour is only allowed to return into the liquid in the tank when a level in the tank is above a predetermined level. More in particular, the control means may be configured for controlling the valve such that the valve is open when the fuel level in the tank is above a predetermined level, and that the valve is closed when the fuel level in the tank is below the predetermined level. In that way it can be avoided that the amount of converted vapour in the liquid is not too high. The sub-tank may be located inside the tank, in a connection line between the tank and the gas converter, or inside the gas converter. The sub-tank may be located inside the tank, and may communicate with the converted vapour inlet of the tank, in a case where the converter is located outside the tank.

Embodiments of the invention are particularly useful for gasoline fuel tanks because of the high pressure that may reign in such tanks. However, embodiments of the invention may also be used in other fuel tanks, in additive tanks, in particular tanks for diesel additives, such as urea tanks, etc. Also in applications where depressurization may occur, tanks according to embodiments of the invention will be useful. The term "fuel tank" is understood to mean an impermeable tank that can store fuel under diverse and varied environmental and usage conditions. The fuel tank according to the invention is preferably made of plastic, that is to say made of a material comprising at least one synthetic resin polymer. In a preferred embodiment the tank is made of polyamide, e.g. polyamide-6. However, all types of plastic may be suitable. Particularly suitable are plastics that belong to the category of thermoplastics. The term "thermoplastic" is understood to mean any thermoplastic polymer, including thermoplastic elastomers, and blends thereof. The term "polymer" is understood to mean both homopolymers and copolymers (especially binary or ternary copolymers). Preferably, the tank also comprises a layer of a fuel-impermeable resin such as, for example, EVOH (a partially hydrolysed ethylene/vinyl acetate copolymer), e.g. an EVOH layer between two HDPE layers. Alternatively, the tank may be subjected to a surface treatment (fluorination or sulphonation) for the purpose of making it impermeable to fuel.

The features set out above for the first aspect of the invention may also be applied to the other aspects.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates a schematic view of an embodiment of a vehicle storage system of the invention;
Figures 2A-2C illustrate schematic views of three possible embodiments of a gas convertor according to the invention;
Figure 3 illustrates a schematic view of an embodiment of a vehicle storage system of the invention including a vapour storage function;
Figure 4 illustrates a schematic view of an embodiment of a vehicle storage system of the invention including a canister;
Figures 5-7 illustrate schematic views of three variants of a vehicle storage system of the invention including a canister;
Figure 8 illustrates a schematic view of an embodiment of a vehicle storage system of the invention including a sub-tank; and
Figure 9 illustrates a schematic view of an embodiment of a vehicle storage system of the invention where the convertor is located inside the tank.

### Description of embodiments

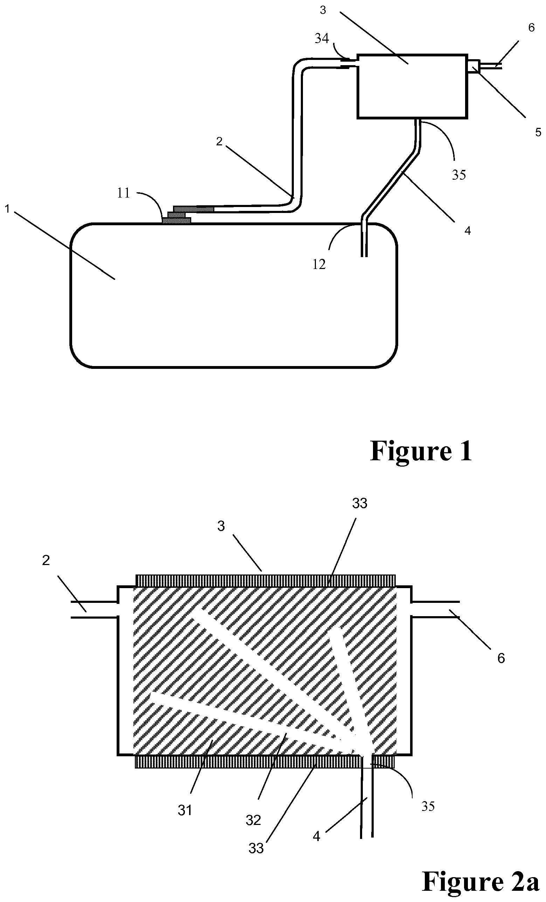

Figure 1 illustrates a first embodiment of a vehicle storage system, comprising a tank 1 for containing vapour. Typically, the tank is to store a composition, such as a fuel primarily comprising liquid, from which the vapour tends to evaporate. Figure 1 furthermore shows a gas convertor 3 arranged to receive vapour from the tank, adapted to chemically convert said vapour under catalysis of biological catalyst. In the present example as shown in Fig. 1, the storage system is configured and arranged to at least partially return reaction products of the chemical conversion to the tank. This is deemed particularly beneficial, in view thereof that the reaction products may enhance the fuel composition. Alcohols such as n-butanol are known to provide a higher octane number resulting in better ignition of the engine, for instance at a cold start. In the illustrated embodiment the converter 3 is located outside the tank, and the tank has a vapour outlet 11 and an inlet 12 to return the converted vapour to the tank. The gas convertor 3 has an inlet 34 connected to the vapour outlet 11 of the tank 1 via a communication line 2, and an outlet 35 connected to the inlet 12 of the tank 1 via a communication line 4. In another particular embodiment, which is not claimed, the gas convertor 3 can be replaced by a metal-based catalyst. In this particular embodiment the metal-based catalysts is arranged to receive vapour from the tank, adapted to chemically convert the received vapour, and arranged to at least partially return the chemically converted vapour to the tank.

The gas convertor 3 is adapted to chemically convert the received vapour into other compounds in dependence on the biological catalysts. A specific type of biological catalyst, the enzyme particularly, will catalyse a specific chemical conversion. Therewith, the conversion can be tuned in view of the vapour composition and the intended output. In the case that the vapour is a fuel vapour, it will typically contain alkanes, such as lower alkanes. The reaction products may then be alcohols, acids etcetera. In the case that the vapour comprises ammonia, the catalysts are suitably chosen for a chemical conversion into - for instance - hydrogen. Suitably, the conversion and/or any post-treatment may give rise to a corresponding pressure reduction, for instance in that the conversion reduces the amount of molecules in vapour phase, or that reaction products may be liquefied more easily, or that reaction products may dissolved, for instance in a fuel in the tank.

In the illustrated embodiment the convertor 3 is located above the tank, i.e. at a position which is such that the converted vapour can flow via line 4 (i.e. return path) from the gas convertor 3 to the tank 1 under the influence of gravity. To further improve the flow the outlet 35 is located preferably in a bottom part of the convertor 3.

Typically the tank is filled with fuel, e.g. gasoline, and the convertor if adapted for performing a hydrocarbon conversion. Gasoline is a mixture of a large number of hydrocarbons with a boiling point in the range of 30-200°C. The lower boiling components, typically lower alkanes are particularly volatile, also at room temperatures. The venting line 2 is connected to the convertor 3 which may temporarily store the vapours and convert them to less volatile fuel vapours or liquids which - in this embodiment - are returned to the tank 1 through the line 4. The convertor 3 is preferably configured for converting molecules of the fuel vapours to less volatile molecules, for instance to heavier hydrocarbons or to alcohols, which become liquid and are returned to the fuel tank 1.

Air and vapour can be evacuated to the outside, or to an air filter (not represented) connected to the outside or through a device reducing bleed emissions such as a honeycomb, or to an on-board diagnostics (OBD) valve (not represented) via an optional line 6. Optionally there may be provided a device 5 ensuring that the pressure inside the system remains within prescribed limits, for instance between -40 to 100 mbar, or between -150 to +350 mbar, relative to atmospheric pressure. This optional device 5 may be an Over-Pressure Relieve valve (OPR) put in parallel with an Under-Pressure Relieve valve (UPR).

As shown in Figure 1, the outlet of the tank 1 is present at a vapour space in the tank, rather than at a bottom side where the tank is usually filled with liquid. In view thereof that the vapour should not get into the air, the storage system of the tank up to the chamber in the gas converter is suitably a closed system from which vapour is not able to evacuate, optionally with the exception of said over-pressure relieve valve. Advantageously, the gas converter comprises one or more inlets configured such that the vapour can enter into the gas converter for accessing the substrate (stored within the gas converter). Suitably, in case that the chamber comprises a substrate, there is suitably an entrance space facing a surface area of the substrate, suitably across the width of the gas converter, such that the vapour may enter the substrate in a wide area.

In one embodiment, the storage system is provided with a pressure controller of which the gas converter 3 forms part. One or more sensors may be present to sense conditions of the system, such as temperature, pressure, loading level in the tank and the like. The sensor output may be used by a controller to determine whether the gas converter is sufficiently active so as to ensure that the pressure does not exceed a predefined limit. The controller may subsequently, if so desired, increase the activity of the gas converter. In one embodiment, such activity increase is effected by means of defining a temperature in the gas converter, such that the biological catalyst is activated and will catalyse the conversion. Herein, use could be made of a batch-wise operation, in which the activation is carried out only upon requests of the controller. Alternatively, use could be made of a continuous operation, wherein the temperature in the gas converter is monitored and held within a predefined range over a longer period. In a further alternative, use could be made of semi-continuous operation. The controller may be configured to determine the operation mode (batch, continuous, semi-continuous) on the basis of operation data of the vehicle, and/or optionally environmental conditions.

Furthermore, the operation of the gas converter may furthermore be controlled and driven, by means of the addition of fresh biological catalyst into the gas converter. It has been found that it is advantageous, at least for certain applications, that a separate enzyme storage unit is present in which biological catalyst may be stored in a manner and in a form that allows preservation of the catalyst over a longer period of time. Such enzyme storage unit is suitably configured to contain the biological catalyst in a manner suitable for its preservation. Both temperature and the pH, and in addition suitably the oxygen concentration, are parameters that are deemed important for the lifetime of the catalysts. The temperature is herein suitably a temperature within a range suitable for preservation. This may be a temperature below its activation temperature, but at least equal to or higher than a minimum temperature, for instance a temperature at which the catalysts would be destroyed by freezing. The biological catalyst may be further provided in a form that is suitable for its preservation. Suitable forms are concentrated liquids and solids, such as powders, granules, beads, pills and capsules. Suitable capsules may be those as known for use in pharmaceuticals and/or food ingredients, or alternatively capsules for use in solid detergents. A suitable, watersoluble capsule is for instance a polyvinylalcohol based capsule .

Figures 2A-2C illustrate three detailed embodiments of a convertor suitable for use in a vehicle storage system of the invention. The convertor 3 contains a substrate31. This substrate 31 is foreseen to have a storage function and a conversion function. The storage function is in this case simply ensured by the free volume of the convertor 3 which is implemented here as a unit with a housing. Particularly if the substrate 31 comprises porous particles such as zeolites or even active carbon, it is suitable for storing hydrocarbons. The conversion is ensured by the substrate 31, which may consist of a substrate with enzymes, which ensures the catalysis of the conversion of the vapour, in this example alkanes into alkane derivatives such as alcohol compounds, aldehyde compounds, carboxylic acid compounds, keton compounds, ester compounds.

The storage and conversion functions of the substrate may be distributed, in the sense that a first part - particularly a first part in the flow direction - is primarily or entirely intended as storage, and a second part is intended for the conversion. Such distribution can be achieved by means of design of the substrate, on the basis of the location of the biological catalyst, on the basis of the choice of the substrate medium, more particularly in view of pore size, and optionally the presence of further components specifically intended for storage, such as active carbon. The substrate 31 containing biological catalyst is hereinafter also referred to as reactive bed.

Suitable enzymes are disclosed in "Expanding the alkane oxygenase toolbox: new enzymes and Applications", Current Opinion in Biotechnology, 2005, volume 16, p. 308-314 and in "Structural insights into diversity and n-alkane biodegradation mechanisms of alkane hydroxylases", Frontiers in Microbiology, March 2013, volume 4, p 1-13. Those are reviews containing all known classes of Alkane Hydroxylases and their corresponding substrates. Suitable enzymes are disclosed in "CYP153A6, a Soluble P450 Oygenase Catalyzing Terminal-Alkane Hydroxylation", Journal of Bacteriology, July 2006, p 5220-5227. The content of this article is included herein in its entirety by reference.

Alkanes are major constituents of natural gas and petroleum. Alkane hydroxylases are a class of enzymes that insert oxygen atoms derived from molecular oxygen into different sites of the alkane terminus (or termini) depending on the type of enzymes. Several enzyme systems have evolved to activate hydrocarbons under aerobic conditions: methane monooxygenases and propane, butane oxygenases, integral membrane di-iron alkane hydroxylases (e.g. AlkB), cytochrome P450 enzymes. One or more enzyme members of the classes mentioned above can be used. Good examples are methane monooxygenases, the engineered P450cam and engineered P450BM-3. Those enzymes are able to hydroxylate short and medium chain n-alkanes. Although alkane hydroxylases enzymes are the preferable choice, enzymes associated with anaerobic alkane degradation may be used alternatively, such as for instance alkylsuccinate synthase enzymes.

In an exemplary embodiment the convertor 3 may be adapted to perform hydroxylation of alkanes to alcohols using one of the following enzyme classes: methane monooxygenase, alkane hydroxylase, P450 enzymes. These classes can be used to convert alkanes up to C24.

Preferably, the enzymes are immobilized, e.g. by attaching the enzymes to a porous substrate 31. The liquid effluents may be collected by draining channels 32 and are flowing back to the tank through line 4 by gravity. The reactive bed 31 may be conditioned thermally by a conditioning system 33 comprising e.g. of an electrical resistance and phase change materials ensuring that appropriate reaction temperatures are maintained for the conversion to take place. Alternatively or in addition, the conditioning can be handled by a conditioning system which is located internally in the convertor 3 (not represented).

In an alternative embodiment, which is not claimed, the convertor 3 may be configured to convert hydrocarbons into heavier hydrocarbons. To that end there may be used a system as disclosed in United States patent US5019355.

In another possible embodiment, which is not claimed, the convertor 3 may be replaced by a conventional catalyst (i.e. metal-based catalyst) configured to convert light hydrocarbons into an alcohol or alcohol precursor. The converted hydrocarbons will then return to tank through the line 4 (not drawn).

According to another variant the conversion may be ensured by aerobic or anaerobic microbial cells. For example, microbial cells applied in bioremediation of hydrocarbon contaminated sites can be used. Hydrocarbons in the environment are biodegraded primarily by bacteria, yeast, and fungi. Bacteria are the most active agents, for example, the use of bacteria from the genera *Pseudomonas* immobilized into polyvinyl alcohol (PVA) cryogel was found to be successful in the bioremediation of hydrocarbon contaminated sites. One or more bacteria species can be immobilized and used to degrade alkanes.

The storage function can be increased by adding absorbing or adsorbing elements in the substrate 31. The desorption of these elements may then be performed as the conversion progresses. These elements can be any material allowing absorption and desorption of vapours, in particular fuel vapours. Examples are active carbons and zeolites. The enzyme substrate and the absorbing or adsorbing elements can be the made of the same material. For example, silica sol-gel porous matrix can be used (Enzymatic conversion of carbon dioxide to methanol by dehydrogenases encapsulated in sol-gel matrix, Ref: Fuel Chemistry Division Preprints 2002, 47(1), 306) or the enzyme can be immobilized on carbon or zeolites (Enzyme Immobilization on Activated Carbon: Alleviation of Enzyme Deactivation by Hydrogen Peroxide, Ref: Biotechnology and Bioengineering Volume 19, Issue 5, pages 769-775, May 1977; Trypsin immobilisation on zeolites, Ref: INTERNATIONAL CHEMICAL ENGINEERING CONFERENCE : CHEMPOR, 9, Coimbra, 2005 - "CHEMPOR 2005 - 9th International Chemical Engineering Conference, Departamento de Engenharia Química da Universidade de Coimbra". [S.1. : s. n.], 2005. ISBN 972-8055-13-7.). Those are examples just to prove that it is possible to immobilize enzymes on this type of material.

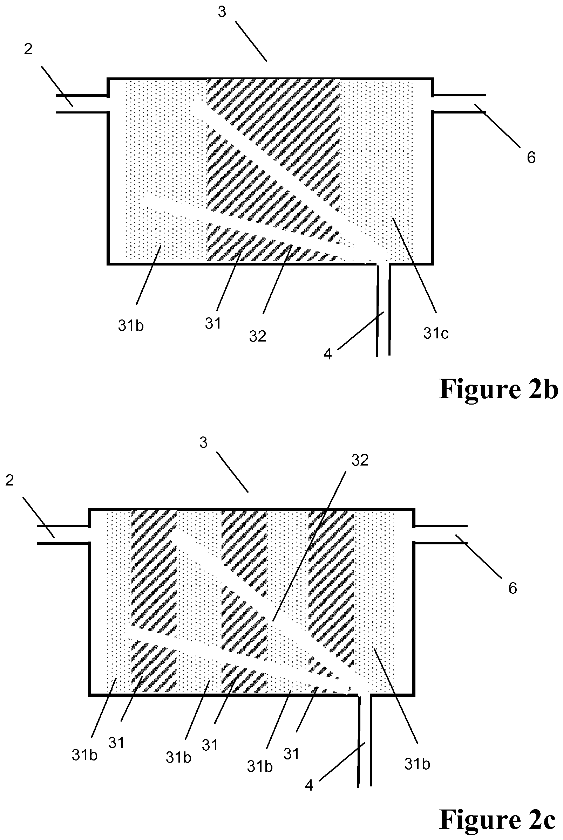

Figure 2B illustrates an alternative embodiment of the convertor 3 where beds 31b and 31c of absorbing or adsorbing materials are added in the convertor 3. In an exemplary embodiment the beds 31b, 31c may form a joint bed surrounding the reactive bed 31. Several of these beds can be combined, see figure 2C. The presence of such absorbing or adsorbing beds 31b, 31c upstream and downstream is preferred but not mandatory. In case of the presence of absorbing or adsorbing beds 31b, 31c, the heat of the ad/absorption can be used to help activate the chemical reaction in the reactive bed 31.

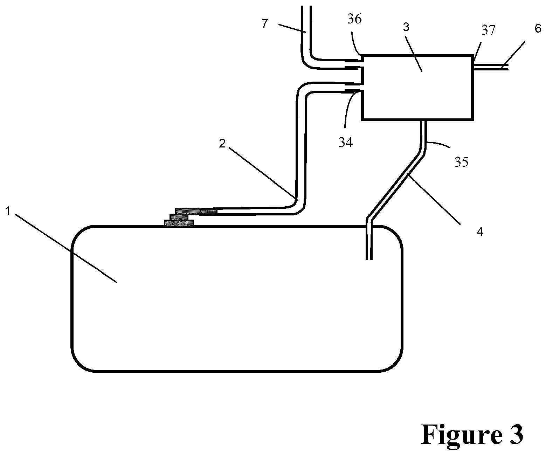

Figure 3 shows another embodiment of a vehicle storage system of the invention. It is similar to the embodiment of figure 1, with this difference that the convertor 3 has an outlet 36 which is connected to the admission of the internal combustion engine through line 7 and a so-called purge valve (not represented). This allows the fuel vapours to be also eliminated by burning them in the engine, just as it is done for the canister of a conventional gasoline fuel system. During the purging, fresh air is admitted through line 6 and sucked via inlet 37 though the substrate contained in the convertor 3. This also allows cleaning of the substrate.

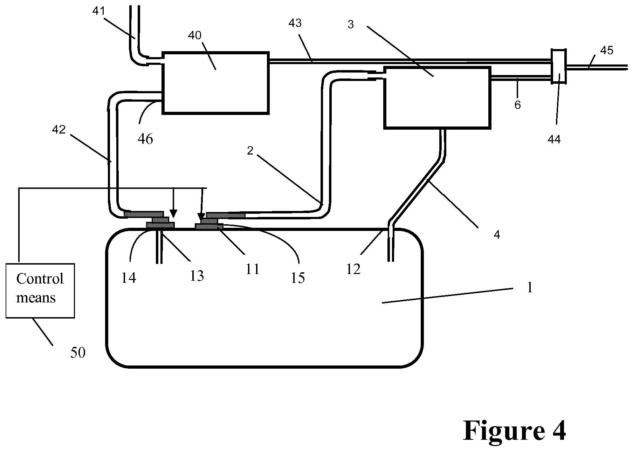

Figure 4 shows another embodiment of a vehicle storage system of the invention. It is similar to the embodiment of figure 1, with this difference a specific canister 40 dedicated to the refuelling vapours is provided. During refuelling, vapours are sent through line 42 to the canister 40, while line 2 is closed, e.g. by an Over Filling Prevention device (not shown). The canister 40 can be purged through line 41 which is connected to the admission of the internal combustion engine by sucking air from line 43.

During normal operation, fuel vapours may be sent in part to the convertor 3 and in part to the canister 40. The convertor 3 chemically converts the vapours contained inside its own storage means and coming from the tank 1 through line 2, but also the vapours contained in the manifold constituted by lines 42, 43 and 41 and the canister 40 through the device 44 and line 6, thanks to the suction effect resulting from the conversion of vapours to liquid/more dense vapour inside the convertor 3.

The tank 1 comprises a first vapour outlet 13 connected to an inlet 46 of the canister 40 and a second vapour outlet 11 connected to an inlet of the convertor 3. A valve 14 is provided for regulating a fuel vapour flow through the first vapour outlet 13 into the canister 40. A valve 15 is provided for regulating a fuel vapour flow through the second vapour outlet 11 into the convertor 3. There may be provided control means 50 for controlling the valve to allow fuel vapour flow in the canister during refuelling of the tank. Although the control means 50 are shown as a separate component, the skilled person understands that the control means may be simple mechanical means integrated in the valves 14, 15.

In the embodiment of figure 4 means for controlling the pressure 44 are shared by lines 6 and 43. Alternatively separate OPR/UPR devices can be used on each line.

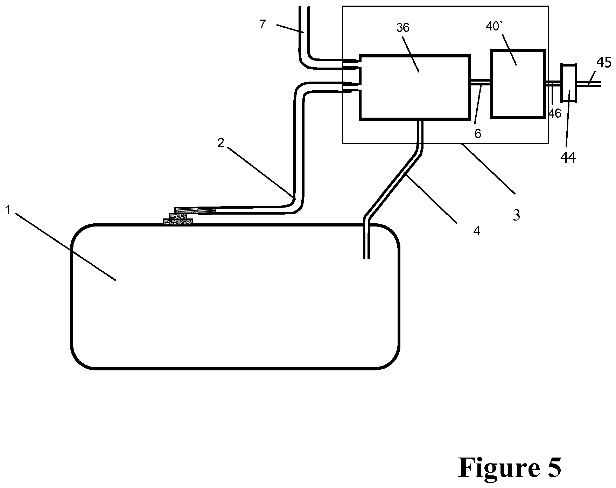

Figure 5 shows another possible embodiment similar to the embodiment of figure 3, with this difference that the convertor 3 comprises a canister unit 40' and a chemical conversion unit 36. Fuel vapours coming from the tank are stored in the conversion unit 36 and, if the conversion speed of the conversion unit 36 is too slow, the vapours are also stored in the canister 40' through line 6. Line 7 connects the conversion unit 36 to the engine vacuum through a purge valve (not represented) as described above for figure 3. Line 46 connects the canister 40' to a pressure regulating device 44 which communicates to the external atmosphere through line 45. As described previously, additional devices may be mounted on this line. In this particular layout, the conversion unit 36 can convert fuel vapours coming from the tank 1 and stored in the conversion unit 36, but also vapours stored in the canister 40' and brought back in the conversion unit 36 by the relative vacuum generated by the conversion of vapours into liquid/more dense vapours or by the effect of the purge flow coming through 45-44-46-40'-6-36-7. Canister 40' can be a honeycomb or can contain a honeycomb, which will be typically placed downstream in direct communication with line 46.

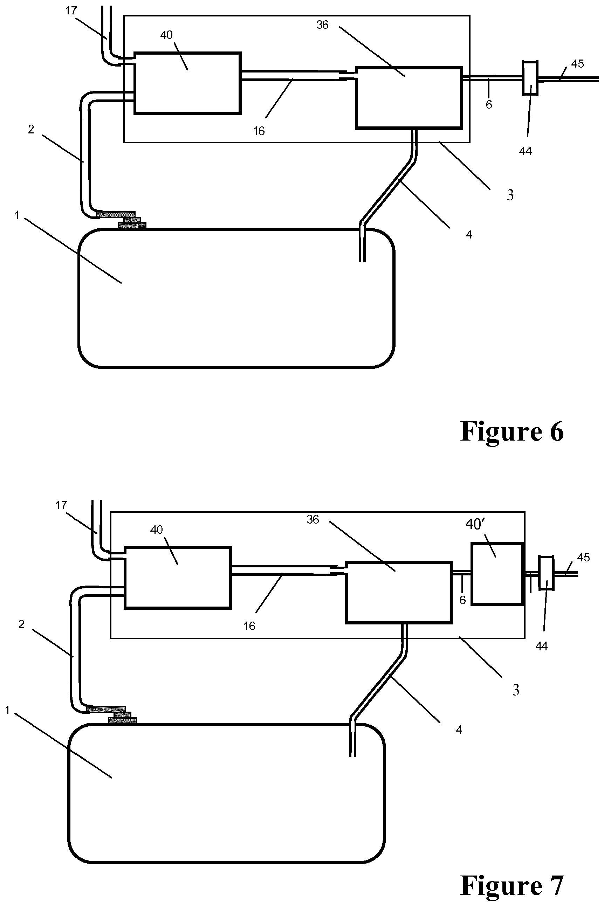

Figure 6 shows another possible embodiment similar to the embodiment of figure 3, with this difference that the convertor 3 comprises a canister unit 40 and a chemical conversion unit 36. The canister 40 is positioned upstream of the conversion unit 36. The purge line is denoted 17.

Figure 7 shows another possible embodiment similar to the embodiment of figure 3, with this difference that the convertor 3 comprises a first canister unit 40, a chemical conversion unit 36, and a second canister unit 40'. The canisters 40 and 40' are placed upstream and downstream of the conversion unit 36, respectively.

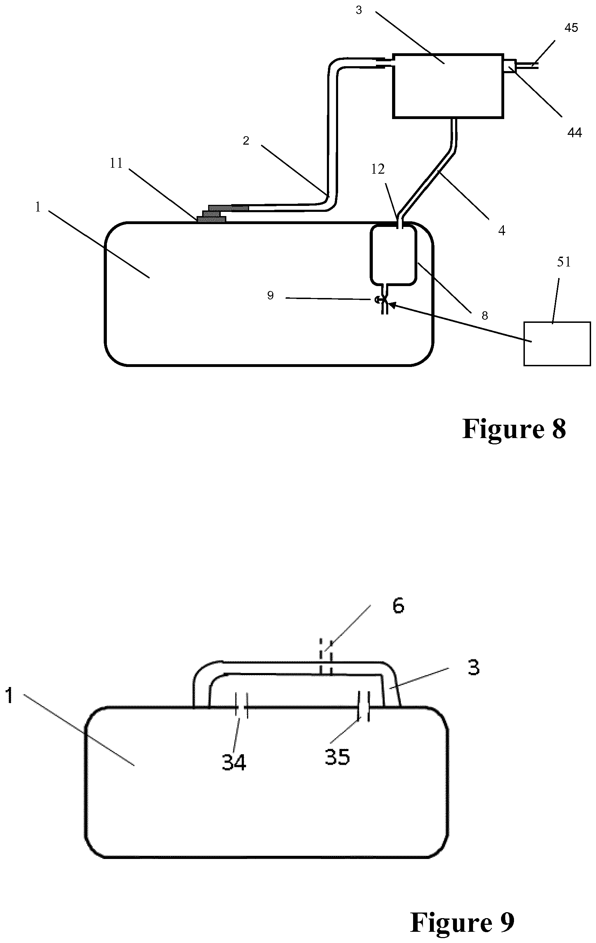

Figure 8 illustrate a further developed embodiment of a vehicle storage system of the invention. This embodiment is similar to the embodiment of figure 1 with this difference that the effluents coming from the gas convertor 3 are collected into an intermediate buffer or sub-tank 8. At a suitable time, the valve 9 is opened so as to mix the effluents, i.e. the reaction products, with the liquid present in tank 1. This allows for instance to reduce the impact of the effluents on the quality of the fuel contained in tank 1, as the valve 9 can for instance only be opened when the fuel level in tank 1 is sufficiently high. Moreover, the sub-tank 8 may be used as a tank comprising an additive. The additive can be mixed with the fuel dependent on the engine operation. For instance, it may be suitable to use the additive, for instance containing alcohols, to improve ignition of the engine during a cold start, and/or as an additive in case that the engine operates at a relatively low revolutions per minute, for instance during driving at a motorway. This can be achieved by electronic or mechanical control means 51. In the illustrated embodiment the control means 51 are shown as a schematic block outside the tank 1, but the skilled person understands that the control means may be e.g. a mechanical means integrated with the valve 9.
The control means 51 of figure 8 can be similar to or different than the control means 50 of figure 4.

Finally figure 9 illustrates an embodiment of a vehicle storage system comprising a tank 1 and a gas convertor 3 which is arranged inside the tank 1. The convertor 3 may be located in an upper part of the tank, and could e.g. be mounted in a specially designed compartment in an upper wall of the tank. The convertor 3 has an inlet 34 which receives vapour from the tank 1, and an outlet 35 for returning converted vapour to the tank 1. It is noted that the outlet 35 may extend all the way into the liquid in the tank 1.

In embodiments of the invention the convertor 3 may be designed in such a way that it can be easily removed and exchanged. This allows renewing easily the substrate, e.g. containing enzymes or another catalyst. The convertor 3 can be an element independent on the tank as illustrated in figures 1-8. It can also be integrated totally or partially into the tank as illustrated in figure 9, or combined with another component of the fuel system.

The convertor 3 may also contain other devices or materials improving its performance; for instance, it can contain specific chemicals, such as a solvent in order to improve the reactive bed performances. The reactions performed in the convertor 3 can be constituted of multiple steps with eventually several catalysts: for instance, hydrocarbon chains may first be broken before being converted to alcohols. Examples of multisteps reactions for converting alkanes to liquid intermediates, are as follows: hydroxylation of an alkane to an alcohol followed by the conversion of the alcohol in an aldehyde, then to a fatty acid; also the alcohols may be further converted to the corresponding ketones that could be further oxidized to an ester. Each of these further conversions may use specific enzymes and could be advantageous to better balance the resulting properties of the fuel mixture.

Accordingly, the present invention relates to the use of biological catalysts for a chemical conversion of vapours. In one embodiment, the system of the invention is provided with a gas converter, which is suitably provided with conditioning means, so as to ensure thermal conditioning of the biological catalysts. The thermal conditioning may be carried out, under control of a system controller, to condition a chamber of the converter at a predefined temperature range at which the biological catalysts are activated and able to catalyse the conversion, for instance in the range of 20-50 °C, preferably between 30 and 40 °C, but alternatively at a temperature at which the biological catalysts are preserved, for instance at a temperature not lower than -5 °C. This moderate temperature of the biological catalysts makes it more suitable for use than metal-based catalysts used in the conversion of hydrocarbons, such as Platinum-based catalysts.

Suitably, reaction products of the conversion are compounds that are more polar and preferably have a higher molecular weight. In such a manner, the incoming vapour is converted into products in the liquid phase. This has the advantage that the overall pressure is reduced, or at least controlled so as not to exceed a set maximum. The vapours are preferably fuel vapour, such as alkanes. The reaction products are for instance acids, alcohols, ketons and aldehydes. The range of reaction products will be dependent on the biological catalysts present in the gas converter. The gas converter is more specifically a gas-phase reactor, wherein the conversion is catalysed by means of heterogeneous catalysis of the biological catalysts, typically provided (i.e. immobilized) on a substrate. Most suitably, the reaction products are transferred back into a tank, particularly a fuel tank.

According to again a further aspect of the invention, a vehicle storage system is provided, comprising a tank 1 for storing a composition that is primarily in liquid form and for containing vapour evaporating from said composition, and a gas converter 3 arranged to receive vapour from the tank, adapted to chemically convert said vapour into reaction product, and arranged to at least partially return the reaction product to the tank. By means of the gas converter the pressure in the tank may be reduced or can be controlled so as not to exceed a maximum.

According to again a further aspect of the invention, a process of operating a storage system of a vehicle is provided, wherein the fuel composition is enhanced by means of a chemical conversion of fuel components, said chemical conversion being catalysed by biological catalysts. Herein the said chemical conversion is suitably carried out in a gas converter separately from a fuel tank, which gas converter is preferably thermally conditioned in a temperature range of activation of the biological catalysts at least during a period of carrying out said chemical conversion.

Whilst the principles of the invention have been set out above in connection with specific embodiments, it is to be understood that this description is merely made by way of example and not as a limitation of the scope of protection which is determined by the appended claims

## Claims

1. A vehicle storage system, comprising:
a tank (1) adapted to contain vapour or liquid and vapour, and;
a gas convertor (3) for chemically converting at least one part of the vapour contained in the tank into liquid reaction product(s), wherein the gas convertor is configured to contain, in use, a biological catalyst for the conversion of the vapour, wherein the conversion of the vapour into liquid reaction product(s) is controlled such that the pressure in the tank does not exceed a prescribed limit or is reduced.

2. The vehicle storage system of claim 1, wherein the gas converter comprises an outlet (35) arranged such that the liquid reaction product(s) can flow from the gas convertor to the tank.

3. The vehicle storage system of claim 1 or 2, wherein the pressure reducing gas converter comprises conditioning means (33) configured for thermally conditioning the converter.

4. The vehicle storage system of any one of the claims 1-3, wherein the gas convertor comprises a substrate to which the biological catalyst is or can be immobilized.

5. The vehicle storage system of claim 4, wherein the substrate is arranged so that vapour flowing in the gas convertor needs to pass through the substrate.

6. The vehicle storage system of any one of the claims 4-5, wherein the substrate comprises drainage channels (32) for draining the liquid reaction product(s) to said outlet (35) of the gas convertor.

7. The vehicle storage system of any one of the claims 1-6, wherein the gas converter is located at a position which is such that the liquid reaction product(s) can flow from the gas convertor to the tank under the influence of gravity.

8. The vehicle storage system of any one of the previous claims, wherein the tank is a fuel tank, and wherein the gas convertor is adapted to convert fuel vapour containing alkane compounds into alkane derivative compounds, preferably alkane derivative compounds having a higher polarity compared to the alkane compounds.

9. The vehicle storage system of any one of the previous claims, wherein the gas converter comprises a solid absorbing matrix (31b, 31c) in which - in use - vapour from the tank is stored by sorption.

10. The vehicle storage system of any one of the previous claims, further comprising a canister (40), wherein the tank comprises a vapour outlet (13) connected to an inlet (46) of the canister (40).

11. The vehicle storage system of any one of the previous claims, further comprising a subtank (8) for collecting the liquid reaction product(s), a valve (9) for regulating the flow of liquid reaction product(s) from the subtank to an inside of the tank, and a control means (50, 51) configured for controlling the valve.

12. A gas convertor comprising an inlet for vapour, a substrate into which biological catalyst is immobilized, said biological catalyst serving for chemical conversion of the vapour into liquid reaction product(s), wherein the substrate is arranged so that vapour flowing in the gas converter needs to pass through the substrate.

13. A vehicle comprising a vehicle storage system as claimed in any of the claims 1-11.

## Patentansprüche

1. Fahrzeugspeichersystem, umfassend:
einen Tank (I), der so ausgelegt ist, dass er Dampf oder Flüssigkeit und Dampf enthält, und einen Gaskonverter (3) zum chemischen Umwandeln mindestens eines Teils des im Tank enthaltenen Dampfes in ein/mehrere flüssige(s) Reaktionsprodukt(e), wobei der Gaskonverter so konfiguriert ist, dass er im Gebrauch einen biologischen Katalysator für die Umwandlung des Dampfes enthält, wobei die Umwandlung des Dampfes in ein/mehrere flüssige(s) Reaktionsprodukt(e) so gesteuert wird, dass der Druck im Tank einen vorgegebenen Grenzwert nicht überschreitet oder reduziert wird.

2. Fahrzeugspeichersystem nach Anspruch 1, wobei der Gaskonverter einen Auslass (35) umfasst, der so angeordnet ist, dass das/die flüssige(n) Reaktionsprodukt(e) vom Gaskonverter zum Tank fließen können.

3. Fahrzeugspeichersystem nach Anspruch 1 oder 2, wobei der druckreduzierende Gaskonverter Konditionierungsmittel (33) umfasst, die zum thermischen Konditionieren des Konverters konfiguriert sind.

4. Fahrzeugspeichersystem nach einem der Ansprüche 1 bis 3, wobei der Gaskonverter ein Substrat umfasst, an dem der biologische Katalysator immobilisiert ist oder sein kann.

5. Fahrzeugspeichersystem nach Anspruch 4, wobei das Substrat so angeordnet ist, dass der im Gaskonverter strömende Dampf das Substrat passieren muss.

6. Fahrzeugspeichersystem nach einem der Ansprüche 4 oder 5, wobei das Substrat Drainagekanäle (32) zum Entleeren des/der flüssigen Reaktionsprodukte(s) zu dem Auslass (35) des Gaskonverters umfasst.

7. Fahrzeugspeichersystem nach einem der Ansprüche 1 bis 6, wobei der Gaskonverter an einer Position angeordnet ist, die so beschaffen ist, dass das/die flüssige(n) Reaktionsprodukt(e) unter dem Einfluss der Schwerkraft vom Gaskonverter zum Tank fließen kann/können.

8. Fahrzeugspeichersystem nach einem der vorhergehenden Ansprüche, wobei der Tank ein Kraftstofftank ist, und wobei der Gaskonverter angepasst ist, um kraftstoffdampfhaltige Alkanverbindungen in Alkanderivatverbindungen zu konvertieren, vorzugsweise Alkanderivatverbindungen mit einer höheren Polarität im Vergleich zu den Alkanverbindungen.

9. Fahrzeugspeichersystem nach einem der vorhergehenden Ansprüche, worin der Gaskonverter eine feste absorbierende Matrix (31b, 31c) umfasst, in der - im Gebrauch - Dampf aus dem Tank durch Sorption gespeichert wird.

10. Fahrzeugspeichersystem nach einem der vorhergehenden Ansprüche, ferner umfassend einen Behälter (40), wobei der Behälter einen Dampfauslass (13) umfasst, der mit einem Einlass (46) des Behälters (40) verbunden ist.

11. Fahrzeugspeichersystem nach einem der vorhergehenden Ansprüche, ferner umfassend einen Untertank (8) zum Sammeln des/der flüssigen Reaktionsprodukte(s), ein Ventil (9) zum Regeln des Durchflusses des/der flüssigen Reaktionsprodukte(s) vom Untertank zu einer Innenseite des Tanks und ein Steuermittel (50, 51), das zum Steuern des Ventils konfiguriert ist.

12. Gaskonverter, umfassend einen Einlass für Dampf, ein Substrat, in das der biologische Katalysator immobilisiert ist, wobei der biologische Katalysator der chemischen Umwandlung des Dampfes in ein/mehrere flüssige(s) Reaktionsprodukt(e) dient, wobei das Substrat so angeordnet ist, dass der im Gaskonverter strömende Dampf das Substrat passieren muss.

13. Fahrzeug, umfassend ein Fahrzeugspeichersystem, wie in einem der Ansprüche 1 bis 11 beansprucht.

## Revendications

1. Système de stockage pour véhicule, comprenant :
un réservoir (1) adapté pour contenir de la vapeur ou du liquide et de la vapeur, et ;
un convertisseur de gaz (3) pour convertir chimiquement au moins une partie de la vapeur contenue dans le réservoir en produit(s) de réaction liquide(s), le convertisseur de gaz étant configuré pour contenir, en utilisation, un catalyseur biologique pour la conversion de la vapeur, la conversion de la vapeur en produit(s) de réaction liquide(s) étant contrôlée de sorte que la pression dans le réservoir ne dépasse pas une limite prédéterminée ou est réduite.

2. Système de stockage pour véhicule selon la revendication 1, dans lequel le convertisseur de gaz comprend une sortie (35) agencée de telle sorte que le ou les produits de réaction liquides sont aptes à s'écouler du convertisseur de gaz vers le réservoir.

3. Système de stockage pour véhicule selon la revendication 1 ou 2, dans lequel le convertisseur de gaz réducteur de pression comprend des moyens de conditionnement (33) configuré pour conditionner thermiquement le convertisseur.

4. Système de stockage pour véhicule selon l'une quelconque des revendications 1 à 3, dans lequel le convertisseur de gaz comprend un substrat sur lequel le catalyseur biologique est ou peut être immobilisé.

5. Système de stockage pour véhicule selon la revendication 4, dans lequel le substrat est agencé de telle sorte que la vapeur s'écoulant dans le convertisseur de gaz doit passer au travers du substrat.

6. Système de stockage pour véhicule selon l'une quelconque des revendications 4 à 5, dans lequel le substrat comprend des canaux de drainage (32) pour drainer le ou les produits de réaction liquides vers ladite sortie (35) du convertisseur à gaz.

7. Système de stockage pour véhicule selon l'une quelconque des revendications 1 à 6, dans lequel le convertisseur de gaz est situé à une position telle que le ou les produits de réaction liquides sont aptes à s'écouler du convertisseur de gaz vers le réservoir sous l'influence de la gravité.

8. Système de stockage pour véhicule selon l'une quelconque des revendications précédentes, dans lequel le réservoir est un réservoir de carburant, et dans lequel le convertisseur de gaz est adapté pour convertir de la vapeur de carburant contenant des composés d'alcane en des composés dérivés d'alcane, de préférence des composés dérivés d'alcane ayant une polarité supérieure à celle des composés d'alcane.

9. Système de stockage pour véhicule selon l'une quelconque des revendications précédentes, dans lequel le convertisseur de gaz comprend une matrice absorbante solide (3 lb, 3 le) dans laquelle - en utilisation - de la vapeur provenant du réservoir est stockée par sorption.

10. Système de stockage pour véhicule selon l'une quelconque des revendications précédentes, comprenant en outre un récipient (40), le réservoir comprenant une sortie de vapeur (13) reliée à une entrée (46) du récipient (40).

11. Système de stockage pour véhicule selon l'une quelconque des revendications précédentes, comprenant en outre un sous-réservoir (8) pour collecter le ou les produits de réaction liquides, une valve (9) pour réguler l'écoulement du ou des produits de réaction liquides en provenance du sous-réservoir vers l'intérieur du réservoir, et des moyens de commande (50, 51) configurés pour commander la valve.

12. Convertisseur de gaz comprenant une entrée pour de la vapeur, un substrat dans lequel un catalyseur biologique est immobilisé, ledit catalyseur biologique servant à la conversion chimique de la vapeur en un ou des produits de réaction liquides, le substrat étant agencé de sorte que la vapeur s'écoulant dans le convertisseur de gaz doit passer au travers du substrat.

13. Véhicule comprenant un système de stockage pour véhicule tel que revendiqué dans l'une quelconque des revendications 1 à 11.
